# EUROPEAN PATENT SPECIFICATION

(11) **EP 4 304 302 B1**
(45) Date of publication and mention of the grant of the patent: **08.04.2026**
(21) Application number: 22183227.2
(22) Date of filing: 06.07.2022
(51) Int. Cl.: H05B 47/19, H04L 41/08, H04L 41/00, H04L 12/28, H04L 41/0806, H05B 47/175

(54) **HANDHELD DEVICE, ENTITY AND SYSTEM FOR CONFIGURING BUILDING TECHNOLOGY DEVICE**
TRAGBARE VORRICHTUNG, EINHEIT UND SYSTEM ZUR KONFIGURATION EINER GEBÄUDETECHNISCHEN VORRICHTUNG
DISPOSITIF PORTABLE, ENTITÉ ET SYSTÈME DE CONFIGURATION DE DISPOSITIF DE TECHNOLOGIE DE CONSTRUCTION

(43) Date of publication of application: 10.01.2024
(73) Proprietor: Tridonic GmbH & Co. KG, 6851 Dornbirn (AT)
(72) Inventor: Nesensohn, Christian, 6850 Dornbirn (AT); Vonach, Christoph, 6850 Dornbirn (AT)
(74) Representative: Beder, Jens

(56) References cited:
- US-A1- 2013 141 011
- US-A1- 2018 042 091
- US-A1- 2020 127 896

## Description

The present invention relates to a handheld device, an entity and a system for configuring a building technology device.

When installing building technology devices in the field, e.g. in a building, there may be the need of configuring the building technology devices with configuration information for adapting the function of the building technology devices to the environment of installation. For this, a computer (e.g. a laptop) may be connected (e.g. via a wired data bus) to a respective building technology device for providing the configuration information to the respective technology device and, thus, configuring the respective technology device.

Using a laptop in the field for performing the configuration of the building technology devices has disadvantages. A laptop is mostly a not robust equipment and not made for use at construction sites. Further, it is difficult to work on a ladder with it, when e.g. a building technology device, which is to be configured with configuration information, is installed on a ceiling of a room.

In the light of the above, it is an object of the present invention to provide means that enable an improved configuring of building technology devices. In particular, it is an object of the present invention to provide means allowing configuration of building technology devices in the field without the above describe drawbacks. US 2018/042091 A1 and US 2020/127896 A1 show the features of the preamble of the independent claims.

These and other objects, which become apparent upon reading the following description, are solved by the subject-matter of the independent claims. The dependent claims refer to preferred embodiments of the invention.

According to a first aspect of the invention, a handheld device for configuring a building technology device is provided. Optionally, the building technology device is a luminaire or an entity of a luminaire. The handheld device comprises wireless communication means configured to wirelessly communicate with the building technology device. Further, the handheld device comprises optical detecting means configured to detect a code comprising configuration information for configuring the building technology device. The handheld device is configured to obtain the configuration information of the code detected by the optical detecting means. The handheld device is configured to configure the building technology device by wirelessly transmitting, using the wireless communication means, the obtained configuration information to the building technology device.

In other words, the first aspect of the invention proposes a handheld device for configuring a building technology device, wherein pick-up of configuration information may be done by optical detecting means of the handheld device from a code. The configuration of the building technology device with the picked-up configuration information may be done by wirelessly transmitting, using wireless communication means of the handheld device, the configuration information to the building technology device.

The handheld device is a device that is configured to be held in a hand and, thus, may be easily operated by a person using a single hand for configuring building technology devices in the field. For example, this allows easily configuring building technology devices when the person is standing on a ladder for the configuration. Since for operation of the handheld device a single hand is sufficient, safety of the person performing the configuration of the building technology devices using the handheld device is improved. Since the pick-up of configuration information and the provision of the configuration information to the building technology device may be done wirelessly by the handheld, the handheld device is suited for being used at construction sites. Namely, no wiring is needed, which may be bulky, may increase the risk of an accident happening (e.g. a person stumbling due to wiring on the floor) and may be not robust for construction sites (e.g. dust and moisture in the field may have a negative effect on the wiring). Further, when using the handheld device for configuring the building technology device, there is no need of using heavy and big equipment for the configuration.

In the light of the above, the handheld device according to the first aspect represent improved means for configuring building technology devices, e.g. in the field (such as on a construction site).

The handheld device is an equipment that may be used in the hand. The handheld device may be configured to be operated or used by a single hand.

Configuring a building technology device may comprise commissioning the building technology device (e.g. initial set-up of the building technology device) and re-configuring the building technology device (e.g. change set-up of the building technology device). That is, the handheld device may be configured for commissioning the building technology device. In addition or alternatively, the handheld device may be configured for re-configuring the building technology device.

A building technology device may be an electronic device that is configured to be installed in a building for enabling and/or providing a function in the building. The function of the building technology device may be electrically controlled. For example, the building technology device may be configured to set or adapt environmental conditions in a building by providing a corresponding function, such as lighting, dimming, cooling, heating, humidification etc. The building technology device may be configured to provide a safety function to a building, such as an alarm function, emergency state detection etc. The building technology device may be configured to detect environmental conditions in a building, such as temperature, light condition, humidity etc. Examples of building technology devices comprise lighting devices (e.g. lighting means, luminaires etc.), heating and/or cooling devices (e.g. heaters, air conditioners etc.), humidification devices (e.g. fans, air humidifiers etc.), dimming devices (e.g. blinds, shutters etc.), safety and/or emergency devices (e.g. security cameras, smoke detectors, alarm systems etc.), electronic sensors (e.g. temperature sensors, smoke detectors, light sensors, humidity sensors etc.), information devices (e.g. electronic displays, loudspeakers etc.) etc. The present invention is not limited to the aforementioned examples of building technology devices.

The terms "building technology apparatus", "building services apparatus" and "building services device" may be used as synonyms for the term "building technology device".

The luminaire may comprise one or more light emitting diodes (LEDs) as a light source. In addition or alternatively the luminaire may comprise at least one other type of light source. The luminaire comprising one or more LEDs may be referred to as LED-luminaire. The entity of the luminaire may be a control unit, a lighting means driver (e.g. LED driver), a communication unit, a sensor of the luminaire or any other known electronic component of a luminaire.

The wireless communication means may be configured to wirelessly communicate using electromagnetic waves and/or sound waves. For example, the wireless communication means may be configured to communicate using radio waves, infrared waves, visible light and/or ultrasound waves. The wireless communication means is not limited to the aforementioned examples of wireless communication and, thus, in addition or alternatively may be differently implemented for a wireless communication. The wireless communication means may be configured to wirelessly communicate according to Bluetooth, wireless local area network (WLAN), near field communication (NFC) and/or any other known wireless communication method(s) (e.g. known protocol(s) and/or standard(s) in the field of wireless communication).

In case the building technology device is a lighting device, such as a luminaire or an entity of the luminaire, the wireless communication means may be configured to communicate according to DALI (i.e. DALI Edition 1), DALI-2 (i.e. DALI Edition 2), ZigBee or any other protocol or standard known in the field of lighting. DALI stands for "digital addressable lighting interface" and is a well-known standard in the field of lighting, wherein DALI-2 is the follow-up standard of DALI.

The optical detecting means may comprise or may be one or more cameras and/or one or more photo sensors, such as one or more image sensors (e.g. charge-coupled device(s) (CCD), CMOS sensor(s) etc.), one or more photo diodes, etc. The optical detecting means may comprise additionally or alternatively any other known electronic components for optical detection (of a code). The optical detecting means may be configured to use red light or infrared waves for detecting the code.

In other words, the handheld device may be configured to read, using the optical detecting means, the configuration information of the code. That is, the handheld device may be configured to decode the detected code in order to derive/obtain the configuration information of the code. The configuration information may be complete configuration information for configuring the building technology device or a part of the complete configuration information. For example, the building technology device may be configurable by a set of multiple different parameters. The configuration information may comprise the set of multiple different parameters (e.g. a value or information for each parameter of the set of multiple different parameters). Alternatively, the configuration information may comprise a subset of one or more parameters of the set of multiple different parameters (e.g. a value or information for each parameter of the subset of the one or more parameters).

For example, the configuration information, e.g. the multiple different parameters, may comprise information on electrical operation parameters (e.g. a maximum current, maximum voltage, maximum electric power, nominal current, nominal voltage etc.), time information (e.g. time at the installation location,), control information (control address, group identifier, etc.), operation mode etc. The aforementioned examples of configuration information is not limiting the present disclosure and not concluding. Thus, any known information or data used for configuring building technology devices may be part of the configuration information (of the code).

The handheld device may comprise processing means for processing the detected code and obtaining the configuration information of the detected code (from the detected code). The processing means may comprise or may be at least one of a controller, a microcontroller, a processor, a microprocessor, a field programmable gate array (FPGA) and application specific integrated circuit (ASIC). The processing means may be configured to control the components of the handheld device such as the wireless communication means and/or the optical detecting means. The processing means may be referred to as "control means" or "processing and control means". The processing means may be configured to perform the functions that are described to be performable by the handheld device.

Optionally, the code is a QR-code. The optical detecting means may be configured to detect the QR-code. The handheld device may be configured to obtain the configuration information of the QR-code detected by the optical detecting means.

The present invention is not limited to the code being a QR-code. Thus, the code may be any other code that is detectable by optical detection means, such as a bar code.

The optical detecting means are configured to detect the code from an electronic display. In addition or alternatively, the optical detecting means are configured to detect the code from a non-electronic medium. Optionally, the non-electronic medium is paper and/or a plastic card.

This allows obtaining the code from a computer display or a mobile phone display. This allows saving paper when generating the configuration information in the form of the code on the computer or the mobile phone. Namely, it is not required to print out the generated code for the handheld device to obtain the configuration information from the code. Detecting the code from a non-electronic medium, such as paper or a plastic card, allows a person to provide the handheld device with the configuration information in the field, by providing the non-electronic medium with the code on it to the handheld device for the handheld device to detect the code and obtain the configuration information. This is robust against environmental conditions, such as dust, in the field (e.g. on a construction site) that may have a negative effect on a computer (e.g. a laptop) or a mobile phone (e.g. smartphone).

Optionally, the wireless communication means are or comprise radio-frequency identification (RFID) means. The handheld device may be configured to wirelessly transmit, using the RFID means, the obtained configuration information to the building technology device. For example, the RFID means are near field communication, NFC, means.

Optionally, the handheld device comprises a user interface for inputting commands to the handheld device. The optical detecting means may be configured to detect the code in response to the handheld device receiving a corresponding command via the user interface. In addition or alternatively, the handheld device may be configured to wirelessly transmit, using the wireless communication means, the obtained configuration information to the building technology device in response to receiving a corresponding command via the user interface.

In other words, detection of the code and, thus, pick-up of the configuration information of the code by the handheld device may be triggered by a corresponding command that is input to the handheld device via the user interface. In addition or alternatively, provision of the obtained configuration information by the handheld device to the building technology device may be triggered by a corresponding command that is input to the handheld device via the user interface. Therefore, a user of the handheld device (person using the handheld device) may trigger detection of the code and, thus, pick-up of the configuration information of the code by the handheld device and/or configuration of the building technology device with the configuration information (by triggering the handheld device to wirelessly transmit the configuration information to the building technology device).

Optionally, the optical detection means may be configured to detect the code while the handheld device is turned on. The optical detection means may be configured to periodically perform a detection of the environment, such that in case the optical detection means is directed to the code for a time longer than the period of the periodical performance of the detection, the optical detection means automatically detects the code. In addition or alternatively, the wireless communication means may automatically transmit (e.g. with a delay) the obtained configuration information of the detected code to the building technology device after the handheld device has detected the code.

The user interface may be or may comprise at least one of the following: touch display, one or more push buttons, a microphone etc. The user interface is not limit to the aforementioned and may be differently implemented. The user interface may be used for doing device settings of the handheld device. The user interface may be used for turning on and off the handheld device.

The wireless communication means may be configured to wirelessly receive information from the building technology device, such as configuration information on a current configuration of the building technology device. The description with regard to wireless transmission via the wireless communication means are correspondingly valid for receiving via the wireless communication means.

This allows obtaining configuration information from a first building technology device and configuring a second building technology device with the obtained configuration information of the first building technology device so that the first building technology device and the second building technology device are equally configured (i.e. configured in the same way).

The wireless communication means may be configured to wirelessly receive configuration information from a computer system (e.g. stationary computer, laptop) or a mobile device, such as a mobile phone (e.g. smart phone). The description with regard to wireless transmission via the wireless communication means are correspondingly valid for receiving via the wireless communication means.

Optionally, the handheld device has the form of a pen. The optical detecting means may be arranged at an end of the handheld device equaling a writing end of the pen.

The handheld device may be referred to as "electronic pen". The handheld device may have the form of a stick.

The handheld device having the form of a pen (or stick) means that the handheld device has an elongated main body, wherein the length of the elongated main body is greater than a lateral dimension of the main body. For example, the handheld device having the form of a pen may mean that the handheld device has an elongated cylindrical form or an elongated substantially cylindrical form, where the height of the cylindrical form or the substantially cylindrical form is greater than the radius of the cylindrical form or the substantially cylindrical form. At the end of the handheld device equaling to the writing end of the pen, the handheld device 1 may have a cone-shaped form or an substantially cone-shaped form.

The optical detection means and the wireless communication means may be positioned or arranged at opposite ends of the handheld device equaling opposite ends of the elongation of the pen. In other words, the optical detection means and the wireless communication means may be positioned or arranged at opposite ends of the elongation of the handheld device having the pen form.

The form of a pen of the handheld device allows an intuitive usage of the handheld device by a user because using a pen is well-known. This reduces misusage of the handheld device, e.g. pointing the wrong end of the handheld device to the code for detecting the code. Further a pen form (stick form) is easy usable by a single hand of a person.

Optionally, the handheld device comprises a clip equaling a clip of the pen. The clip may be or may comprise an antenna of the wireless communication means.

Thus, the clip may not only be used for wearing or carrying the handheld device by a person during the times the handheld device is not used, but the clip may also support the wireless transmission of the configuration information to the building technology device.

The handheld device is configured to obtain, from multiple different codes detected by the optical detecting means, multiple different parameters for configuring the building technology device. The handheld device is configured to select, among the obtained multiple different parameters, one or more parameters. The handheld device is configured to configure the building technology device by wirelessly transmitting, using the wireless communication means, the selected one or more parameters to the building technology device.

The handheld device may be configured to combine the multiple different parameters obtained from the multiple different codes detected by the optical detection means to form complete configuration information for configuring the building technology device. Thus, the configuration information transmittable by the wireless communication means to the building technology device may be complete configuration information or a part of the complete configuration information.

The handheld device may be configured to select, among the obtained multiple different parameters, one or more parameters, in response to receiving a corresponding command or corresponding commands via a user interface of the handheld device. The handheld device may be configured to combine one or more parameters of the multiple different parameters, optionally the multiple different parameters, obtained from the multiple different codes detected by the optical detection means to form complete configuration information in response to receiving a corresponding command or corresponding commands via a user interface of the handheld device.

The selection of the one or more parameters or the forming of the complete configuration information may be done on the run as the multiple different codes are detected (i.e. using data storage caching). The selected one or more parameters may be transmitted by the wireless communication means to the building technology device after the selection is done. The complete configuration information may be transmitted by the wireless communication means to the building technology device after the complete configuration information is formed.

The selection of one or more parameters or the forming of the complete configuration information may be done using corresponding data (i.e. multiple parameters obtained from multiple codes) that are permanently stored (i.e. in a non-volatile data storage of the handheld device)

Optionally, the handheld device is configured to store the obtained configuration information in a data storage of the handheld device.

This means, the handheld device is configured to permanently store the obtained configuration information in the data storage. The data storage may be a non-volatile data storage. The obtained configuration information may be configuration information obtained from the code (or multiple codes) detected by the optic detection means. In addition or alternatively, the obtained configuration information may be configuration information that may optionally be wirelessly received by the wireless configuration means from a building technology device or from another entity, such as a computer system (such as a stationary computer, laptop etc.) or a mobile device (such as a mobile phone, e.g. smart phone, etc.).

Optionally, the handheld device comprises a user interface for inputting commands to the handheld device. The handheld device may be configured to select a data set of configuration information among different data sets of configuration information stored in the data storage, and wirelessly transmit, using the wireless communication means, the selected data set of configuration information to the building technology device in response to receiving a corresponding command via the user interface.

The data set of configuration information may comprise or be a set of one or more parameters for configuring the building technology device.

Optionally, the handheld device comprises feedback means configured to provide visual and/or auditory feedback on a state and/or operation of the handheld device.

The feedback means may be or may comprise a visual indicator, e.g. an indicator LED, indicating a charge state of a battery (e.g. rechargeable battery) of the handheld device, wherein the battery provides an electrical energy source for electrically powering the handheld device.

The feedback means may be or may comprise a loudspeaker for providing feedback on an input (e.g. an command) to the user interface and/or on carrying out of a function of the handheld device in response to an input (e.g. an command) to the user interface.

For example, the feedback means (e.g. the loudspeaker) may be configured to provide a corresponding feedback (e.g. a first type of sound) in response to the optical detecting means having detected the code. The feedback means (e.g. the loudspeaker) may be configured to provide a corresponding feedback (e.g. a second type of sound) in response to the handheld having obtained the configuration information of the code. The feedback means may be configured to output the obtained configuration information as auditory feedback. The feedback means may be configured to provide a corresponding feedback (e.g. a third type of sound) in response to the wireless communication means having wirelessly transmitted the configuration information to the building technology device.

The feedback means (e.g. the loudspeaker) may output the obtained configuration information and/or configuration information selected for transmission by the wireless communication device to the building technology device.

The handheld device may comprise a battery, e.g. rechargeable battery, for electrically supplying the components of the handheld device. The handheld device may be water resistant and/or resistant against dust.

In order to achieve the handheld device according to the first aspect of the invention, some or all of the above described optional features may be combined with each other.

According to a second aspect of the invention, an entity for configuring a building technology device is provided. Optionally, the building technology device is a luminaire or an entity of a luminaire. The entity is configured to generate one or more codes comprising configuration information for configuring the building technology device such that the one or more codes are detectable by optical detecting means.

The entity may be implemented by hardware and/or software. For example the entity may be an app, a computer program, a web based program. The entity may be a computer system, such as a stationary computer, a laptop, etc.; or a mobile device, such as mobile phone (e.g. a smart phone), etc.

The app, computer program or web based program may guide a user through configuration possibilities of the building technology device such that at each step the user is asked to set a respective parameter of configuration information for configuring the building technology device. At the end the app, computer program or web based program may generate a code comprising the configuration information generated or selected during the setting process of the app, computer program or web based program.

At least one of the one or more codes may be in the form of a pictogram providing a hint to the configuration information. For example, the pictogram may show the kind of building technology device. In case a code comprises information on a parameter for configuring the building technology device, then the pictogram may show the type of parameter or provide a hint thereto. For example, in case the parameter is a maximum current then the pictogram may show or be an abbreviation or symbol of the maximum current. The pictogram may comprise or show one or more letters and/or one or more numbers.

The entity according to the second aspect of the invention achieves the same advantages as the handheld device according to the first aspect of the invention.

The above description with regard to the handheld device according to the first aspect of the invention is correspondingly valid for the entity according to the second aspect of the invention.

The entity is configured to generate the code comprising the configuration information for configuring the building technology device.

The configuration information may be complete configuration information for configuring the building technology device or a part of the complete configuration information. For example, the configuration information may comprise all parameters for configuring the building technology device or only one or more of the parameters.

The configuration information for configuring the building technology device comprises information on two or more parameters for configuring the building technology device. The entity is configured to generate for each parameter of the two or more parameters, two or more different codes comprising information on different settings of the parameter.

For example, a parameter of the two or more parameters may be the maximum current allowed during operation of the building technology device and the two or more different codes (for this parameter) may comprise information on two or more different maximum current values, respectively. That is, each code of the two or more different codes may comprise information on a respective maximum current value. Another parameter of the two or more parameters may be an operation mode in which the building technology device is to operate and the two or more different codes (for the other parameter) may comprise information on two or more different operation modes, respectively. That is, each code of the two or more different codes may comprise information on a respective operation mode. The aforementioned is only by way of example and not limiting the present invention. Thus, the two or more parameters may be any other parameters known for configuring building technology devices.

Optionally, the entity is a computer system configured to output the one or more codes on a computer display, wirelessly transmit the one or more codes to a mobile device, and/or print the one or more codes on a non-electronic medium. Optionally, the non-electronic medium is paper and/or a plastic card.

The computer system may comprise or may be a stationary computer, a laptop, etc. The mobile device may be a mobile phone, such as a smartphone, etc.

In order to achieve the entity according to the second aspect of the invention, some or all of the above described optional features may be combined with each other.

According to a third aspect of the invention, a system for configuring a building technology device is provided. Optionally, the building technology device is a luminaire or an entity of a luminaire. The system comprises a handheld device according to the first aspect of the invention as described above, and an entity according the second aspect of the invention as described above. The entity is configured to generate one or more codes comprising configuration information for configuring the building technology device. The handheld device is configured to detect the one or more codes generated by the entity, obtain the configuration information of the one or more detected codes, and wirelessly transmit the obtained configuration information to the building technology device.

The system according to the third aspect of the invention achieves the same advantages as the handheld device according to the first aspect of the invention.

The above description with regard to the handheld device according to the first aspect of the invention and the entity according to the second aspect of the invention is correspondingly valid for the system according to the third aspect of the invention.

In order to achieve the system according to the third aspect of the invention, some or all of the above described optional features may be combined with each other.

It has to be noted that all devices, elements, units and means described in the present application could be implemented in software or hardware elements or any kind of combination thereof. All steps which are performed by the various entities described in the present application as well as the functionalities described to be performed by the various entities are intended to mean that the respective entity is adapted to or configured to perform the respective steps and functionalities.

In the following, the invention is described exemplarily with reference to the enclosed Figures, in which
- **Figure 1**: schematically shows a block diagram of an example of a handheld device according to an embodiment of the invention;
- **Figure 2**: schematically shows an example of a handheld device according to an embodiment of the invention; and
- **Figures 3 and 4**: each schematically show an example of using the handheld device of Figure 2.

In the Figures, corresponding elements have the same reference signs. The proportions and dimensions of the elements shown in the Figures do not represent the handheld device and its components, a building technology device and optionally an entity for configuring a building technology device to scale. They are merely chosen to describe the structure and function of the handheld device and its components, a building technology device and optionally an entity for configuring a building technology device.

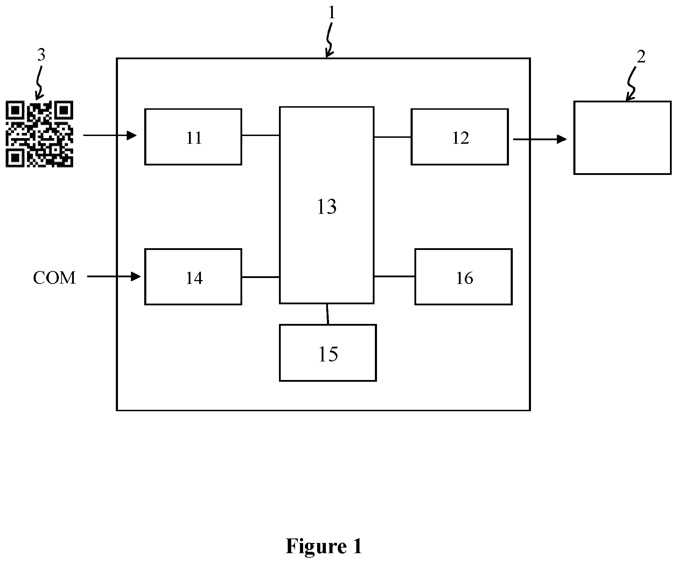

**Figure 1** schematically shows a block diagram of an example of a handheld device according to an embodiment of the invention. The handheld device of Figure 1 is an example of the handheld device according to the first aspect of the invention. The description of the handheld device according to the first aspect is correspondingly valid for the handheld device of Figure 1.

The handheld device 1 of Figure 1 is a handheld device for configuring a building technology device 2. Optionally, the building technology device is a luminaire or an entity of a luminaire. The building technology device 2 may be any other type of building technology device. The handheld device 1 comprises wireless communication means 12 configured to wirelessly communicate with the building technology device 2. Further, the handheld device 1 comprises optical detecting means 11 configured to detect a code 3 comprising configuration information for configuring the building technology device 2. According to the example of Figure 1, the code 3 is a QR-code. This is only by way of example and not limiting the present disclosure. Thus, the code 3 may be any other type of code detectable by optical detecting means, such as a bar code. This is also valid for the other Figures showing a QR-code. The handheld device 1 is configured to obtain the configuration information of the code 3 detected by the optical detecting means 11. In other words, the handheld device 1 is configured to obtain the configuration information from the code 3, i.e. decode the code 3, to obtain the configuration information comprised by the code 3. The handheld device 1 is configured to configure the building technology device 2 by wirelessly transmitting, using the wireless communication means 12, the obtained configuration information to the building technology device 2.

As shown in Figure 1, the handheld device 1 may comprise processing means 13 configured to process (e.g. decode) the code 3 detected by the optical detecting means 11. The processing means 13 may be configured to control the components of the handheld device 1, such as the optical detection means 11, the wireless communication means 12 and so on. Thus, the processing means 13 may be referred to as "control means" or "processing and control means". The handheld device 1 may comprise a user interface 14 for inputting (by a user of the handheld device 1) commands COM to the handheld device 1.

For example, the optical detecting means 11 may be configured to detect the code 3 in response to the handheld device 1 receiving a corresponding command via the user interface 14. Optionally, the processing means 13 may be configured to control the optical detecting means 11 to detect the code 3 in response to the processing means 13 receiving a corresponding command from the user interface 14 (i.e. in response to a user inputting the corresponding command to the user interface 14). In addition or alternatively, the handheld device 1 may be configured to wirelessly transmit, using the wireless communication means 12, the obtained configuration information to the building technology device 2 in response to receiving a corresponding command via the user interface 14. Optionally, the processing means 13 may be configured to control the wireless communication means 12 to transmit the obtained configuration information to the building technology device 2 in response to the processing means 13 receiving a corresponding command from the user interface 14 (i.e. in response to a user inputting the corresponding command to the user interface 14).

The handheld device 1 may comprise a data storage 15, such as a non-volatile data storage, for storing data (e.g. the configuration information obtained from the code 3 detected by the optical detecting means 11). Optionally, the processing means 13 are configured to obtain the configuration information of the code 3 (by decoding the code 3) and store the obtained configuration information in the data storage 15.

The configuration information of the code 3 may be complete configuration information for configuring the building technology device 2 or may be a part of the complete configuration information. In the latter case, the handheld device 1, optionally the processing means 13, may be configured to combine the configuration information of multiple different codes to form the complete configuration information for configuring the building technology device 2. For example, the complete configuration information for configuring the building technology device 2 may comprise multiple different parameters. The code 3 may comprise the multiple different parameter and, thus, the configuration information of the code 3 may be the complete configuration information. Alternatively, the code 3 may comprise a subset of the multiple different parameters (e.g. one or more different parameters) and, thus, the configuration information of the code 3 may be a part of the complete configuration information.

The handheld device 1, optionally the processing means 13, may be configured to obtain, from multiple different codes (not sown in Figure 1) detected by the optical detecting means 11, multiple different parameters for configuring the building technology device 2, and select, among the obtained multiple different parameters, one or more parameters. The handheld device 1, optionally the processing means 13, may be configured to configure the building technology device 2 by wirelessly transmitting, using the wireless communication means 12, the selected one or more parameters to the building technology device 2. The aforementioned function may be performed by the handheld device 1, optionally the processing means 13, in response to receiving a corresponding command via the optional user interface 14.

The handheld device 1, optionally the processing means 13, may be configured to store the configuration information of the code 3 or the multiple different parameters of the multiple different codes (not shown in Figure 1) in the optional data storage 15. The handheld device, optionally the processing means 13, may be configured to select among the different parameters stored in the data storage 15 one or more parameters and configure the building technology device 2 with the selected one or more parameters by transmitting the selected one or more parameters (as configuration information) to the building technology device 2. The aforementioned function may be performed by the handheld device 1, optionally the processing means 13, in response to receiving a corresponding command via the optional user interface 14.

The handheld device 1, optionally the processing means 13, may be configured to select a data set of configuration information among different data sets of configuration information stored in the data storage 15, and wirelessly transmit, using the wireless communication means 12, the selected data set of configuration information to the building technology device 2 in response to receiving a corresponding command via the optional user interface 14.

Optionally, the handheld device comprises feedback means 16 configured to provide visual and/or auditory feedback on a state and/or operation of the handheld device 1.

The feedback means 16 may be or may comprise a visual indicator, e.g. an indicator LED, indicating a charge state of a battery (e.g. rechargeable battery) of the handheld device, wherein the battery provides an electrical energy source for electrically powering the handheld device.

The feedback means 16 may be or may comprise a loudspeaker for providing feedback on an input (e.g. an command) to the optional user interface 14 and/or on carrying out of a function of the handheld device (e.g. by the optical detecting means 11, the wireless communication means 12 and/or the optional processing means 13) in response to an input (e.g. an command) to the user interface 14.

The handheld device 1 may comprise a battery, e.g. rechargeable battery, for electrically supplying the components of the handheld device 1 (not shown in Figure 1). The handheld device 1 may be water resistant and/or resistant against dust.

For further information on the handheld device 1, building technology device 2 and code 3 of Figure 1, e.g. possible implementation forms of the function of the handheld device 1 and building technology device 2 and possible implementation forms of the code 3, reference is made to the above description of the handheld device according to the first aspect of the invention and to the corresponding description of the entity according to the second aspect and the system according to the third aspect of the invention.

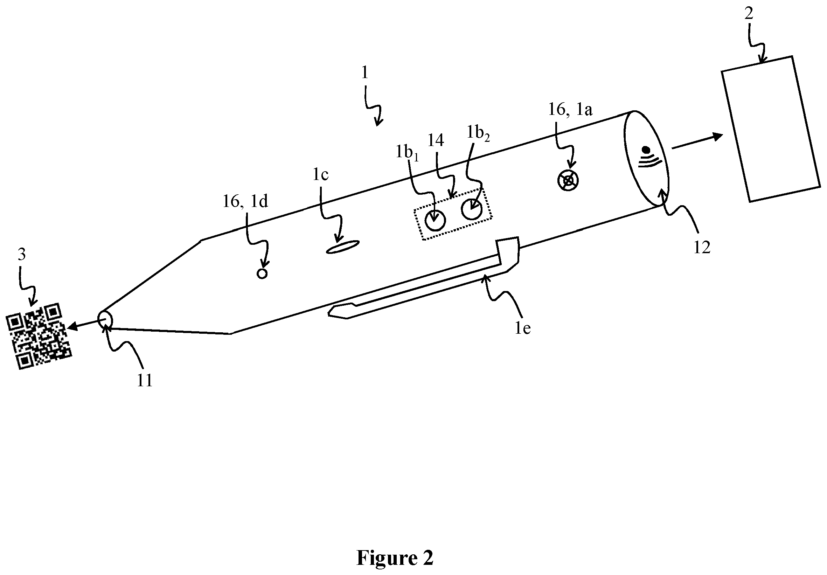

**Figure 2** schematically shows an example of a handheld device according to an embodiment of the invention. The handheld device of Figure 2 is an example of a possible implementation of the handheld device of Figure 1. Therefore, the above description of the handheld device of the handheld device of Figure 1 is correspondingly valid for handheld device of Figure 2 and in the following substantially additional feature(s) of the handheld device 1 as well as the example of the form of the handheld device of Figure 2 are described.

As shown in Figure 2, the handheld device 2 may have the form of a pen. The optical detecting means 11 may be arranged at an end of the handheld device 1 equaling a writing end of the pen.

As shown in Figure 2, the handheld device 1 having the form of a pen means that the handheld device 1 has an elongated main body, wherein the length of the elongated main body is greater than a lateral dimension of the main body. For example, as shown in Figure 2, the handheld device having the form of a pen may mean that the handheld device has an elongated cylindrical form or an elongated substantially cylindrical form, where the height of the cylindrical form or the substantially cylindrical form is greater than the radius of the cylindrical form or the substantially cylindrical form. As shown in Figure 2, at the end of the handheld device 1 equaling to the writing end of the pen, the handheld device 1 may have a cone-shaped form or an substantially cone-shaped form.

As shown in Figure 2, the optical detection means 11 and the wireless communication means 12 may be arranged at opposite ends of the handheld device equaling opposite ends of the elongation of the pen. In other words, the optical detection means and the wireless communication means may be arranged at opposite ends of the elongation of the handheld device 1 having the pen form.

As shown in Figure 2, the handheld device 1 comprises a clip equaling a clip 1e of the pen. The clip 1e may be or may comprise an antenna of the wireless communication means 12.

According to the example of Figure 2, the handheld device 1 may comprise a user interface 14 in the form of two push buttons 1b₁ and 1b₂. This is not limiting the present invention and, thus, the user interface 14 may be differently implemented.

For example, the first push button 1b₁ may be configured such that a command is input to the handheld device 1 (e.g. the processing means 13) when the first push button 1b₁ is pressed. This command triggers or causes the optical detection means 11 to start working and, thus, detect a code 3 when the end of the handheld device 1, at which the optical detection means 11 are arranged, is positioned near or in a vicinity of the code 3 and directed towards the code 3. Optionally, this command triggers or causes the wireless communication means 12 to start working and, thus, to be configured to wirelessly receive configuration information from the building technology device 2, when the end of the handheld device 1, at which the wireless communication means 12 are arranged, is positioned near or in a vicinity of the building technology device 2 and directed towards the building technology device 2.

The wireless communication means 12 may be configured for a radio-frequency identification (RFID), optionally near field communication (NFC), wireless communication. The present invention is not limited thereto and, thus, the wireless communication means may additionally or alternatively be configured for any other known wireless communication method(s). Therefore, the first push button 1b₁ may be used to trigger picking-up/obtaining configuration information. The first push button 1b₁ may be referred to as "pick"-button.

For example, the second push button 1b₂ may be configured such that a second command is input to the handheld device 1 (e.g. the processing means 13) when the second push button 1b₂ is pressed. The second command triggers or causes the wireless communication means 12 to wirelessly transmit configuration information (optionally selected by the handheld device, e.g. the processing means, and/or stored in the data storage). Thus, the second command triggers or causes the wireless communication means 12 to wirelessly transmit the configuration information to the building technology device 2, when the end of the handheld device 1, at which the wireless communication means 12 are arranged, is positioned near or in a vicinity of the building technology device 2 and directed towards the building technology device 2. The second push button 1b₂ may be referred to as "place"-button.

The user interface 14, e.g. the push buttons 1b₁ and 1b₂, may be used for doing device settings of the handheld device. For example, pressing one of the push buttons 1b₁ and 1b₂ may increase volume of the optional loudspeaker 1a and pressing the other one of the push buttons 1b₁ and 1b₂ may decrease the volume of the optional loudspeaker 1b. Optionally, pressing one of the push buttons 1b₁ and 1b₂ for a time period (e.g. 5 seconds) may turn off or turn on the handheld device.

According to the example of Figure 2, the optional feedback means 16 of the handheld device 1 may comprise a loudspeaker 1a for auditory feedback and an indicator LED 1d for visual feedback. The feedback means 16 may be differently implemented.

For example, the indicator LED 1d may be configured to indicate a charge state of a battery (e.g. rechargeable battery) of the handheld device 1, wherein the battery provides an electrical energy source for electrically powering the handheld device 1.

The loudspeaker 1a may be configured to provide feedback on an input (e.g. an command) to the user interface 14 and/or carrying out of a function of the handheld device 1 (e.g. by the optical detecting means 11, the wireless communication means 12 and/or the optional processing means 13) in response to an input (e.g. an command) to the user interface 14.

According to the example of Figure 2, the handheld device may comprise an electrical input 1c, such as a USB-input, for providing electrical energy and optionally data to the handheld device. For example, the electrical input 1c may be electrically connected to an electrical energy source (e.g. the USB-input of a computer), for being electrically supplied from the electrical energy source. This may charge the battery of the handheld device. The electrical input 1c may be electrically connected to a computer system (e.g. the USB-input of the computer) for receiving via a wire information, such as configuration information for the building technology device, from the computer system. This received information may be provided to the processing means of the handheld device 1 and/or stored in a data storage of the handheld device 1.

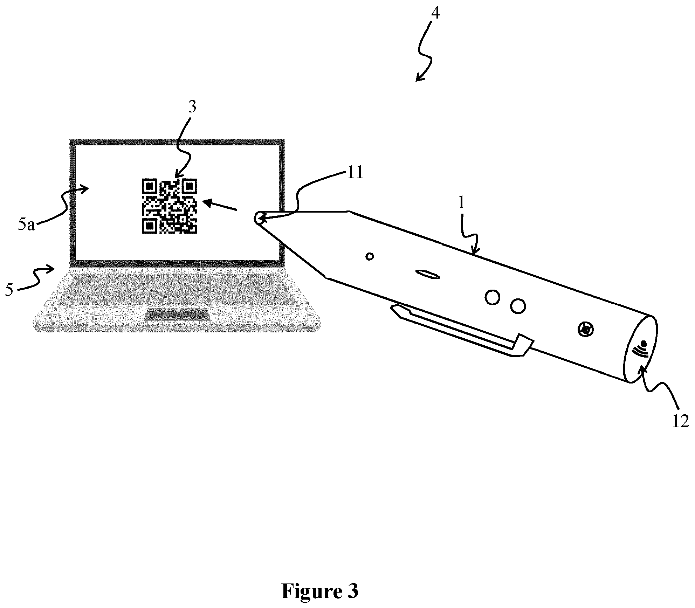

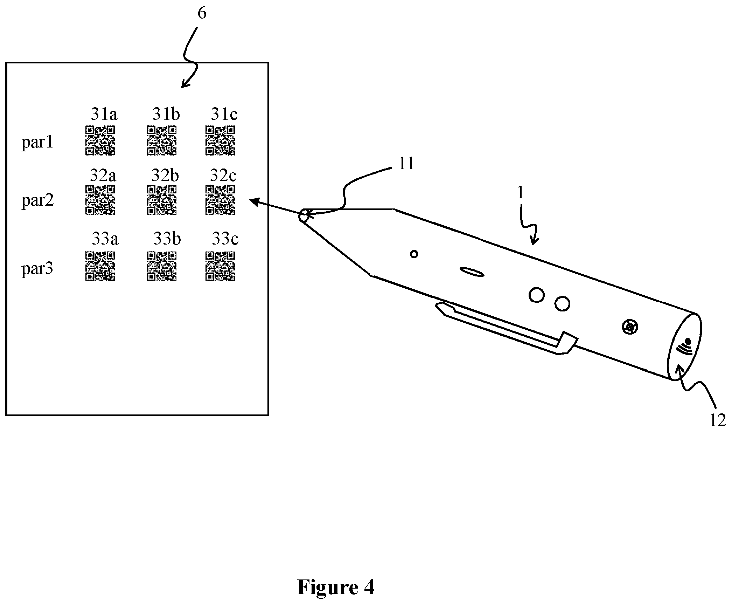

**Figures 3** **and** **4** each schematically show an example of using the handheld device of Figure 2.

As shown in Figure 3, the code 3 comprising the configuration information for configuring the building technology device may be generated by a computer system 5, such as a laptop shown in Figure 3. The present invention is not limited to the computer system 5 shown in Figure 3 and may be a different computer system, such as a stationary computer optionally with a printer. The laptop 5 of Figure 3 is an example of the entity according to the second aspect of the invention for configuring a building technology device. The laptop 5 is configured to generate one or more codes (according to the example of Figure 3 a code 3) comprising configuration information for configuring the building technology device such that the one or more codes are detectable by optical detecting means, such as the optical detecting means 11 of the handheld device 1.

An app, a computer program and/or a web based program, which may be run or performed on the laptop 5, may be the entity for configuring the building technology device that is configured to generate the one or more codes comprising the configuration information. Thus, the app, a computer program and/or a web based program may be an example of the entity according to the second aspect of the present invention.

The single code 3 displayed on the computer display 5a of the laptop 5 may optionally comprise the complete configuration information for configuring the building technology device. Thus, detecting the code 3 using the optical detection means 11 of the handheld device 1 and wirelessly transmitting, using the wireless communication means 12 of the handheld device 1, the obtained configuration information of the code 3 to the building technology device (not shown in Figure 3), allows configuring the building technology device with the complete configuration information.

According to the example of Figure 3, the computer system 5 is configured to output the one or more codes on a computer display 5a. This allows generating the configuration information in the form of the one or more codes and pick-up of this information in office. Additionally or alternatively, the computer system 5 may be configured to wirelessly transmit the one or more codes to a mobile device, such as a mobile phone (e.g. smartphone). This allows the mobile device to display the received one or more codes on its display for the optical detecting means 11 of the handheld 1 to detect the one or more codes when the optical detecting means 11 is directed to the mobile device's display and positioned near the display (not shown in Figure 3). This allows generating the configuration information in the form of the one or more codes in office (by the computer system) and pick-up of this information (from the display of the mobile device) on site, where the building technology device is to be configured. In addition or alternatively, the computer system 5 may be configured to print the one or more codes on a non-electronic medium, optional paper and/or plastic card (not shown in Figure 3). This allows generating the configuration information in the form of the one or more codes in office (by the computer system) and pick-up of this information (from the paper or plastic) on site, where the building technology device is to be configured. The example of multiple codes on a non-electronic medium is described with regard to Figure 4. The optical detecting means 11 of the handheld device may be configured to detect the code 3 (or one or more codes) from an electronic display, such as the display 5a of the computer system 5 (e.g. the laptop), and/or from a non-electronic medium, such as paper and/or a plastic card.

The description of Figure 3 is correspondingly valid for the handheld device of Figure 4. For example, the configuration information for configuring the building technology device comprises information on two or more parameters for configuring the building technology device. As shown in Figure 4, the computer system 5 of Figure 3 (not shown in Figure 4) may be configured to generate for each parameter of two or more parameters par1, par2 and par3 two or more different codes 31a, 31b, 31c; 32a, 32b, 32c and 33a, 33b, 33c, respectively, comprising information on different settings of the parameter. This may be generated on a non-electronic medium 6 (e.g. paper or a plastic card). Alternatively, this may be output on an electronic display (e.g. the display 5a of the computer system 5 of Figure 3).

Figure 4 shows three different parameters and for each parameter three different codes, wherein each code of the three different codes for a respective parameter comprises a different setting (e.g. different value) of the respective parameter. The number of parameters and codes per parameter is only by way of example and does not limit the present invention. The following description is thus correspondingly valid for a different number of parameters and/or codes. For example, the parameter par1 may be a maximum current allowable during operation of the building technology device to be configured. Thus, the three codes 31a, 31b and 31c may comprise three different values of the allowable maximum current, respectively. The parameter par2 may be a maximum voltage allowable during operation of the building technology device to be configured. Thus, the three codes 32a, 32b and 32c may comprise three different values of the allowable maximum voltage, respectively. The parameter par3 may be an operation mode of the building technology device to be configured. Thus, the three codes 33a, 33b and 33c may comprise information on three different operation modes, respectively.

The optional loudspeaker of the handheld device 1 may be configured to output a feedback on which setting of a respective parameter is selected when pointing the optical detection means 11 to a code of the codes of the respective parameter for detecting the code and obtaining the configuration information (i.e. the setting of the respective parameter) of the code. The different configuration information (i.e. settings of the multiple different parameters) of the multiple codes detected by the optical detection means may be stored in the data storage as a data set (e.g. complete configuration information).

The different codes for each parameter of the multiple different parameters allows selecting different configuration information for configuring the building technology device. The obtained configuration information of the codes detected by the optical detection means may be wirelessly transmitted to the building technology device for configuring the building technology device.

For further information on the components of Figures 1 to 4, e.g. the handheld device 1, the computer system 5 and the building technology device 2, reference is made to the description of the handheld device of the first aspect, the entity of the second aspect and the system of the third aspect.

In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. A handheld device (1) for configuring a building technology device (2), optionally a luminaire or an entity of a luminaire, wherein
- the handheld device comprises
- wireless communication means (12) configured to wirelessly communicate with the building technology device (2), and
- optical detecting means (11) configured to detect a code (3) comprising configuration information for configuring the building technology device (2);
- the handheld device (1) is configured to obtain the configuration information of the code (3) detected by the optical detecting means (11); and
- the handheld device (1) is configured to configure the building technology device (2) by wirelessly transmitting, using the wireless communication means (12), the obtained configuration information to the building technology device (2);
**characterized in that** the handheld device (1) is configured to
- obtain, from multiple different codes (31a, 31b, 31c; 32a, 32b, 32c; 33a, 33b, 33c) detected by the optical detecting means (11), multiple different parameters (par1, par2, pa3) for configuring the building technology device (2),
- select, among the obtained multiple different parameters, one or more parameters, and
- configure the building technology device (2) by wirelessly transmitting, using the wireless communication means (12), the selected one or more parameters to the building technology device (2).

2. The handheld device (1) according to claim 1, wherein
- the code (3) is a QR-code;
- the optical detecting means (11) are configured to detect the QR-code; and
- the handheld device (1) is configured to obtain the configuration information of the QR-code (3) detected by the optical detecting means (11).

3. The handheld device (1) according to claim 1 or 2, wherein
- the optical detecting means (11) are configured to detect the code (3) from an electronic display (5a) and/or a non-electronic medium (6), optional paper and/or plastic card.

4. The handheld device (1) according to any one of the previous claims, wherein
- the wireless communication means (12) are or comprise radio-frequency identification, RFID, means; and
- the handheld device (1) is configured to wirelessly transmit, using the RFID means, the obtained configuration information to the building technology device (2).

5. The handheld device (1) according to any one of the previous claims, wherein
- the handheld device (1) comprises a user interface (14) for inputting commands (COM) to the handheld device (1); wherein
- the optical detecting means (11) are configured to detect the code (3) in response to the handheld device (1) receiving a corresponding command via the user interface (14), and/or
- the handheld device (1) is configured to wirelessly transmit, using the wireless communication means (12), the obtained configuration information to the building technology device (2) in response to receiving a corresponding command via the user interface (14).

6. The handheld device (1) according to any one of the previous claims, wherein
- the handheld device (1) has the form of a pen; and
- the optical detecting means (11) are arranged at an end of the handheld device (1) equaling a writing end of the pen.

7. The handheld device (1) according to claim 6, wherein
- the handheld device (1) comprises a clip (1e) equaling a clip of the pen; and
- the clip (1e) is or comprises an antenna of the wireless communication means (12).

8. The handheld device (1) according to any one of the previous claims, wherein
- the handheld device is configured to store the obtained configuration information in a data storage (15) of the handheld device (1).

9. The handheld device (1) according to claim 8, wherein
- the handheld device comprises a user interface (14) for inputting commands (COM) to the handheld device (1); and
- the handheld device (1) is configured to select a data set of configuration information among different data sets of configuration information stored in the data storage (15), and wirelessly transmit, using the wireless communication means (12), the selected data set of configuration information to the building technology device (2) in response to receiving a corresponding command via the user interface (14).

10. An entity for configuring a building technology device (2), optionally a luminaire or an entity of a luminaire, wherein
- the entity is configured to generate one or more codes (3; 31a, 31b, 31c; 32a, 32b, 32c; 33a, 33b, 33c) comprising configuration information for configuring the building technology device (2) such that the one or more codes (3) are detectable by optical detecting means;
**characterized in that**
- the configuration information for configuring the building technology device comprises information on two or more parameters for configuring the building technology device, and
- the entity is configured to generate for each parameter of the two or more parameters (par1, par2, par3), two or more different codes (31a, 31b, 31c; 32a, 32b, 32c; 33a, 33b, 33c) comprising information on different settings of the parameter.

11. The entity according to claim 10, wherein the entity is configured to generate the code (3) comprising the configuration information for configuring the building technology device.

12. The entity according to claim 10 or 11, wherein the entity is a computer system (5) configured to
- output the one or more codes on a computer display (5a),
- wirelessly transmit the one or more codes to a mobile device, and/or
- print the one or more codes on a non-electronic medium (6), optional paper and/or plastic card.

13. System (4) for configuring a building technology device (2), optionally a luminaire or an entity of a luminaire, wherein
- the system (4) comprises
- a handheld device (1) according to any one of claims 1 to 9, and
- an entity (5) according to any one of claims 10 to 12;
- the entity is configured to generate one or more codes (3; 31a, 31b, 31c; 32a, 32b, 32c; 33a, 33b, 33c) comprising configuration information for configuring the building technology device (2); and
- the handheld device (1) is configured to
- detect the one or more codes (3; 31a, 31b, 31c; 32a, 32b, 32c; 33a, 33b, 33c) generated by the entity,
- obtain the configuration information of the one or more detected codes (3; 31a, 31b, 31c; 32a, 32b, 32c; 33a, 33b, 33c), and
- wirelessly transmit the obtained configuration information to the building technology device (2).

## Patentansprüche

1. **Handgerät (1) zum Konfigurieren eines gebäudetechnischen Geräts (2),** wahlweise einer Leuchte oder einer Einheit einer Leuchte, umfassend:
- drahtlose Kommunikationsmittel (12), die dazu konfiguriert sind, drahtlos mit dem gebäudetechnischen Gerät (2) zu kommunizieren;
- optische Erfassungseinrichtungen (11), die dazu konfiguriert sind, einen Code (3) zu erfassen, der Konfigurationsinformationen zum Konfigurieren des gebäudetechnischen Geräts (2) enthält;
- wobei das Handgerät (1) dazu konfiguriert ist, die Konfigurationsinformationen des von den optischen Erfassungseinrichtungen (11) erfassten Codes (3) zu erhalten; und
- wobei das Handgerät (1) dazu konfiguriert ist, das gebäudetechnische Gerät (2) zu konfigurieren, indem es die erhaltenen Konfigurationsinformationen unter Verwendung der drahtlosen Kommunikationsmittel (12) drahtlos an das gebäudetechnische Gerät (2) überträgt;
**dadurch gekennzeichnet, dass** das Handgerät (1) dazu konfiguriert ist, aus mehreren verschiedenen, von den optischen Erfassungseinrichtungen (11) erfassten Codes (31a, 31b, 31c; 32a, 32b, 32c; 33a, 33b, 33c) mehrere verschiedene Parameter (par1, par2, par3) zum Konfigurieren des gebäudetechnischen Geräts (2) zu erhalten und unter den erhaltenen Parametern einen oder mehrere Parameter auszuwählen und das Gebäudetechnikgerät (2) durch drahtlose Übertragung der ausgewählten einen oder mehreren Parameter unter Verwendung der drahtlosen Kommunikationsmittel (12) zu konfigurieren.

2. **Handgerät (1) nach Anspruch 1,** wobei:
- der Code (3) ein QR-Code ist;
- die optischen Erfassungseinrichtungen (11) dazu konfiguriert sind, den QR-Code zu erfassen; und
- das Handgerät (1) dazu konfiguriert ist, die Konfigurationsinformationen des von den optischen Erfassungseinrichtungen (11) erfassten QR-Codes (3) zu erhalten.

3. **Handgerät (1) nach Anspruch 1 oder 2,** wobei die optischen Erfassungseinrichtungen (11) dazu konfiguriert sind, den Code (3) von einem elektronischen Display (5a) und/oder einem nicht-elektronischen Medium (6) - gegebenenfalls Papier und/oder Plastikkarte -zu erfassen.

4. **Handgerät (1) nach einem der vorhergehenden Ansprüche,** wobei:
- die drahtlosen Kommunikationsmittel (12) RFID-Mittel (Radio-Frequency Identification) sind oder umfassen; und
- das Handgerät (1) dazu konfiguriert ist, mittels der RFID-Mittel die erhaltenen Konfigurationsinformationen drahtlos an das gebäudetechnische Gerät (2) zu übertragen.

5. **Handgerät (1) nach einem der vorhergehenden Ansprüche,** wobei:
- das Handgerät (1) eine Benutzerschnittstelle (14) zum Eingeben von Befehlen (COM) in das Handgerät (1) umfasst;
- die optischen Erfassungseinrichtungen (11) dazu konfiguriert sind, den Code (3) in Reaktion auf den Empfang eines entsprechenden Befehls über die Benutzerschnittstelle (14) zu erfassen; **und/oder**
- das Handgerät (1) dazu konfiguriert ist, die erhaltenen Konfigurationsinformationen mittels der drahtlosen Kommunikationsmittel (12) drahtlos an das gebäudetechnische Gerät (2) zu übertragen, in Reaktion auf den Empfang eines entsprechenden Befehls über die Benutzerschnittstelle (14).

6. **Handgerät (1) nach einem der vorhergehenden Ansprüche,** wobei das Handgerät (1) die Form eines Stifts aufweist, **und** wobei die optischen Erfassungseinrichtungen (11) an einem Ende des Handgeräts (1) angeordnet sind, das einem Schreibende des Stifts entspricht.

7. **Handgerät (1) nach Anspruch 6,** wobei:
- das Handgerät (1) einen Clip (1e) entsprechend dem Clip eines Stifts umfasst; und
- der Clip (1e) eine Antenne der drahtlosen Kommunikationsmittel (12) ist oder eine solche Antenne umfasst.

8. **Handgerät (1) nach einem der vorhergehenden Ansprüche,** wobei das Handgerät (1) dazu konfiguriert ist, die erhaltenen Konfigurationsinformationen in einem Datenspeicher (15) des Handgeräts (1) zu speichern.

9. **Handgerät (1) nach Anspruch 8,** wobei:
- das Handgerät (1) eine Benutzerschnittstelle (14) zum Eingeben von Befehlen (COM) in das Handgerät (1) umfasst; und
- das Handgerät (1) dazu konfiguriert ist, einen Datensatz von Konfigurationsinformationen unter verschiedenen, in dem Datenspeicher(15) gespeicherten Datensätzen von Konfigurationsinformationen auszuwählen und mittels der drahtlosen Kommunikationsmittel (12) den ausgewählten Datensatz von Konfigurationsinformationen drahtlos an das gebäudetechnische Gerät (2) zu übertragen, in Reaktion auf den Empfang eines entsprechenden Befehls über die Benutzerschnittstelle (14).

10. **Einheit (5) zum Konfigurieren eines gebäudetechnischen Geräts (2),** wahlweise einer Leuchte oder einer Einheit einer Leuchte, wobei:
- die Einheit (5) dazu konfiguriert ist, einen oder mehrere Codes (3; 31a, 31b, 31c; 32a, 32b, 32c; 33a, 33b, 33c) zu erzeugen, die Konfigurationsinformationen zum Konfigurieren des gebäudetechnischen Geräts (2) umfassen, derart, dass der eine oder die mehreren Codes (3) durch optische Erfassungseinrichtungen detektierbar sind;
- die Konfigurationsinformationen zum Konfigurieren des gebäudetechnischen Geräts (2) Informationen zu zwei oder mehr Parametern zur Konfiguration des gebäudetechnischen Geräts (2) umfassen;
**dadurch gekennzeichnet, dass** die Einheit (5) dazu konfiguriert ist, für jeden Parameter der zwei oder mehr Parameter (par1, par2, par3) zwei oder mehr verschiedene Codes (31a, 31b, 31c; 32a, 32b, 32c; 33a, 33b, 33c) zu erzeugen, die Informationen zu unterschiedlichen Einstellungen des Parameters umfassen.

11. **Einheit nach Anspruch 10,** wobei die Einheit (5) dazu konfiguriert ist, **den Code (3)** zu erzeugen, der die Konfigurationsinformationen zum Konfigurieren des gebäudetechnischen Geräts (2) umfasst.

12. **Einheit nach Anspruch 10 oder 11,** wobei es sich bei der Einheit (5) um ein Computersystem handelt, das dazu konfiguriert ist:
- den einen oder die mehreren Codes (3) auf einem Computer-Display (5a) auszugeben;
- den einen oder die mehreren Codes drahtlos an ein mobiles Gerät zu übertragen; **und/oder**
- den einen oder die mehreren Codes auf einem nicht-elektronischen Medium (6)
- gegebenenfalls Papier und/oder Plastikkarte - auszudrucken.

13. **System (4) zum Konfigurieren eines gebäudetechnischen Geräts (2),** wahlweise einer Leuchte oder einer Einheit einer Leuchte, umfassend:
- ein Handgerät (1) nach einem der Ansprüche 1 bis 9; und
- eine Einheit (5) nach einem der Ansprüche 10 bis 12;
wobei die Einheit (5) dazu konfiguriert ist, einen oder mehrere Codes (3; 31a, 31b, 31c; 32a, 32b, 32c; 33a, 33b, 33c) zu erzeugen, die Konfigurationsinformationen zum Konfigurieren des gebäudetechnischen Geräts (2) umfassen; **und**
wobei das Handgerät (1) dazu konfiguriert ist:
- **mindestens einen** der von der Einheit (5) erzeugten Codes (3; 31a, 31b, 31c; 32a, 32b, 32c; 33a, 33b, 33c) zu detektieren;
- die Konfigurationsinformationen des mindestens einen detektierten Codes zu erhalten; und
- die erhaltenen Konfigurationsinformationen drahtlos an das gebäudetechnische Gerät (2) zu übertragen.

## Revendications

1. **Dispositif portatif (1) pour configurer un dispositif de technologie de bâtiment (2),** éventuellement un luminaire ou une entité d'un luminaire, comprenant :
- des moyens de communication sans fil (12) configurés pour communiquer sans fil avec le dispositif de technologie de bâtiment (2) ;
- des moyens de détection optique (11) configurés pour détecter un code (3) comprenant des informations de configuration destinées à configurer le dispositif de technologie de bâtiment (2) ;
- le dispositif portatif (1) étant configuré pour obtenir les informations de configuration du code (3) détecté par les moyens de détection optique (11) ; et
- le dispositif portatif (1) étant configuré pour configurer le dispositif de technologie de bâtiment (2) en transmettant sans fil, à l'aide des moyens de communication sans fil (12), les informations de configuration obtenues audit dispositif de technologie de bâtiment (2) ;
**caractérisé en ce que** le dispositif portatif (1) est configuré pour obtenir, à partir de plusieurs codes (31a, 31b, 31c ; 32a, 32b, 32c ; 33a, 33b, 33c) distincts détectés par les moyens de détection optique (11), plusieurs paramètres (par1, par2, par3) différents destinés à configurer le dispositif de technologie de bâtiment (2), et pour sélectionner, parmi les paramètres obtenus, un ou plusieurs paramètres, et pour configurer le dispositif de technologie du bâtiment (2) en transmettant sans fil, au moyen des moyens de communication sans fil (12), le ou les paramètres sélectionnés vers le dispositif de technologie du bâtiment (2).

2. **Dispositif portatif (1) selon la revendication 1,** dans lequel :
- le code (3) est un code QR ;
- les moyens de détection optique (11) sont configurés pour détecter le code QR ; et
- le dispositif portatif (1) est configuré pour obtenir les informations de configuration du code QR (3) détecté par les moyens de détection optique (11).

3. **Dispositif portatif (1) selon la revendication 1 ou 2,** dans lequel les moyens de détection optique (11) sont configurés pour détecter le code (3) depuis un affichage électronique (5a) et/ou un support non électronique (6), de préférence en papier et/ou en carte plastique.

4. **Dispositif portatif (1) selon l'une quelconque des revendications précédentes,** dans lequel :
- les moyens de communication sans fil (12) sont, ou comprennent, des moyens d'identification par radiofréquence (RFID) ; et
- le dispositif portatif (1) est configuré pour transmettre sans fil, au moyen des moyens RFID, les informations de configuration obtenues audit dispositif de technologie de bâtiment (2).

5. **Dispositif portatif (1) selon l'une quelconque des revendications précédentes,** dans lequel :
- le dispositif portatif (1) comprend une interface utilisateur (14) pour entrer des commandes (COM) audit dispositif portatif (1) ;
- les moyens de détection optique (11) sont configurés pour détecter le code (3) en réponse à la réception par le dispositif portatif (1) d'une commande correspondante via l'interface utilisateur (14) ; **et/ou**
- le dispositif portatif (1) est configuré pour transmettre sans fil, à l'aide des moyens de communication sans fil (12), les informations de configuration obtenues audit dispositif de technologie de bâtiment (2) en réponse à la réception d'une commande correspondante via l'interface utilisateur (14).

6. **Dispositif portatif (1) selon l'une quelconque des revendications précédentes,** dans lequel le dispositif portatif (1) se présente sous la forme d'un stylo, **et** dans lequel les moyens de détection optique (11) sont disposés à une extrémité dudit dispositif portatif (1) correspondant à la pointe d'écriture du stylo.

7. **Dispositif portatif (1) selon la revendication 6,** dans lequel :
- le dispositif portatif (1) comprend un clip (1e) semblable à un clip de stylo ; et
- le clip (1e) fait office d'antenne des moyens de communication sans fil (12) ou comporte une telle antenne.

8. **Dispositif portatif (1) selon l'une quelconque des revendications précédentes,** dans lequel le dispositif portatif (1) est configuré pour mémoriser les informations de configuration obtenues dans une mémoire (15) dudit dispositif portatif (1).

9. **Dispositif portatif (1) selon la revendication 8,** dans lequel:
- le dispositif portatif (1) comprend une interface utilisateur (14) pour entrer des commandes (COM) audit dispositif portatif (1) ; et
- le dispositif portatif (1) est configuré pour sélectionner un ensemble de données d'informations de configuration parmi différents ensembles d'informations de configuration mémorisés dans la mémoire (15), et pour transmettre sans fil, à l'aide des moyens de communication sans fil (12), l'ensemble de données d'informations de configuration sélectionné audit dispositif de technologie de bâtiment (2) en réponse à la réception d'une commande correspondante via l'interface utilisateur (14).

10. **Entité (5) pour configurer un dispositif de technologie de bâtiment (2),** éventuellement un luminaire ou une entité d'un luminaire, dans laquelle :
- l'entité (5) est configurée pour générer un ou plusieurs codes (3; 31a, 31b, 31c; 32a, 32b, 32c; 33a, 33b, 33c) comprenant des informations de configuration destinées à configurer le dispositif de technologie de bâtiment (2), de sorte que le ou les codes (3) soient détectables par des moyens de détection optique ;
- les informations de configuration destinées à configurer le dispositif de technologie de bâtiment (2) comprennent des informations relatives à au moins deux paramètres de configuration dudit dispositif de technologie de bâtiment (2) ;
**caractérisée en ce que** l'entité (5) est configurée pour générer, pour chaque paramètre parmi lesdits au moins deux paramètres (par1, par2, par3), deux ou plusieurs codes distincts (31a, 31b, 31c; 32a, 32b, 32c; 33a, 33b, 33c) comprenant des informations relatives à des réglages différents dudit paramètre.

11. **Entité selon la revendication 10,** dans laquelle l'entité (5) est configurée pour générer **le code (3)** comprenant les informations de configuration destinées à configurer le dispositif de technologie de bâtiment (2).

12. **Entité selon la revendication 10 ou 11,** dans laquelle l'entité est un système informatique (5) configuré pour :
- afficher le ou les codes sur un écran d'ordinateur (5a) ;
- transmettre sans fil le ou les codes à un dispositif mobile ; **et/ou**
- imprimer le ou les codes sur un support non électronique (6), de préférence en papier et/ou en carte plastique.

13. **Système (4) pour configurer un dispositif de technologie de bâtiment (2),** éventuellement un luminaire ou une entité d'un luminaire, comprenant :
- un dispositif portatif (1) selon l'une des revendications 1 à 9 ; et
- une entité (5) selon l'une des revendications 10 à 12 ;
dans lequel l'entité (5) est configurée pour générer un ou plusieurs codes (3; 31a, 31b, 31c; 32a, 32b, 32c; 33a, 33b, 33c) comprenant des informations de configuration destinées à configurer le dispositif de technologie de bâtiment (2) ; **et**
dans lequel le dispositif portatif (1) est configuré pour :
- détecter le ou les codes (3; 31a, 31b, 31c; 32a, 32b, 32c; 33a, 33b, 33c) générés par l'entité (5) ;
- obtenir les informations de configuration dudit ou desdits codes détectés ; et
- transmettre sans fil les informations de configuration obtenues audit dispositif de technologie de bâtiment (2).
